# EUROPEAN PATENT SPECIFICATION

(11) **EP 2 007 141 B1**
(45) Date of publication and mention of the grant of the patent: **21.11.2018**
(21) Application number: 07290760.3
(22) Date of filing: 20.06.2007
(51) Int. Cl.: H04N 7/14, H04N 7/15

(54) **A system and method for providing a video conference**
System und Verfahren zur Bereitstellung einer Videokonferenz
Système et procédé pour fournir une vidéoconférence

(43) Date of publication of application: 24.12.2008
(73) Proprietor: Provenance Asset Group LLC, Essex, CT 06426 (US)
(72) Inventor: Van Der Meerssche, Bart, 3150 Wespelaar (BE); McBrearty, Clifford Daniel, 2660 Hoboken (BE); De Mondt, Hans, 2960 Brecht (BE); Van Rompaey, Stijn, 2610 Wilrijk (BE)
(74) Representative: Whiting, Gary

(56) References cited:
- EP-A- 1 162 815
- WO-A-00/38414
- WO-A-2005/029739

## Description

### Field of the Invention

The present invention generally relates to the field of video conferencing systems. More particularly, the present invention relates to systems and methods for video conferencing between at least a first location, the video conference room, where multiple video conference participants are present, and a second location from where one or more users are remotely participating to the conference through the video conference facilities.

### Background of the Invention

In order to meet with people that are present at different locations, often video conferencing is used. The advantages are clear, namely it is possible to meet and have eye contact between video conference participants without traveling to each other.

Usually such video conferencing system comprises a fixed camera in at least one of the conferencing rooms which transmits video images of that conference room to the other conference room(s), e.g. the location where the remote participant is residing.

If at a conference room multiple participants are taking part, it is advantageous to be able to direct the camera towards the participant of interest to have a better view on this particular participant. This can be done by a user which is present in the conference room and which directs the camera. However, this can also be done by a remote user, usually one of the participants in one of the other conference rooms, which is able to move the camera by remote control in the direction of the participant of interest.

In the PEBBLES project, which stands for Providing Education by Bringing Learning Environments to Students (http://pebblesproiect.org), a video conferencing system is presented, particularly for hospitalized, homebound and special needs children. The direction of the camera in the conference room can be controlled by the remote user, usually the homebound child.

A problem of this kind of system is that, when the remote user directed the camera to a participant of interest and he wishes to redirect it to another participant, it is difficult to find that participant, because that participant is currently outside the camera view. In other words, the remote user does no longer have the ability to look in the conference room in peripheral vision, which he would have if he were actually present in the room, and he has to keep in mind where each participant is seated. Particularly in case the participants to the video conference are moving in the conference room, redirecting the camera to a participant which is currently out of view is very difficult and time consuming. The only possibility is zooming out again (if the camera has zoom in/out features) or moving the camera in order to get a view of the conference room as a whole and then redirecting and eventually zooming/focussing the camera onto the participant of interest.

In "A Robotic Assistant For Ambient Intelligent Meeting Rooms" (M.Nuttin et al, Ambient Intelligence, First European Symposium, ISBN 3-540-20418-0, Springer Verlag), a remote movable robot with a head-height camera incorporating a Pan-Tilt-Zoom assembly is described for use in a video conferencing system. A mechanism is described which allows the robot to move around the conference room autonomously or semi-autonomously, avoiding fixed obstacles in its path.

Although this robotic assistant is able to move in the conference room, the remote user still does not have a peripheral vision, i.e. if the camera is directed to a certain participant of interest, the other participants are outside the camera view. They can change places or even leave the conference room without the remote user knowing it.

Another problem is that the robotic assistant is not able to avoid hitting participants which are moving, because they don't have a predictable or fixed position. Further, such robot, moving towards the participant of interest in the conference room, may severely disturb that participant, and attract the attention of the participants as a consequence of which they no longer concentrate on the conference. A robotic camera moving towards the participant also deprives the remote user of the ability to anonymously concentrate on one participant and monitor or follow the mimics thereof.

Further, a general problem of the above systems is that the remote user itself has to direct the camera to the participant of interest. Directing a camera requires much attention, which is obviously a disadvantage while having a conversation with that participant or other participants to the video conference, particularly when the participant of interest is moving.

EP-A-1 162 815 describes a system wherein a directable camera is used which is remotely controlled by a remote user to direct itself to a selected participant. The system builds a static model by periodically scanning the conference room, identifies human faces from the camera's overall bit image and identifies the locations of the faces on the screen. Each person's face can then be tagged on the screen with a name which is recorded in a training session at the beginning of the video conference.

A disadvantage of this system is that, in case the number of participants is high, the system is not able anymore to identify the human faces.

Another disadvantage is that if a participant's face is hidden by another participant or an object, the system is not able to identify its location.

Another disadvantage is that, since the system of EP-A-1 162 815 scans periodically, the location of a participant can change faster than the directing speed of the camera.

A further disadvantage of the system of EP-A-1 162 815 is that before starting the video conference a training session is required to allow the system to scan the conference room, to identify human faces and its location, and to record tag names for each face. In case a new participant enters the conference room during the video conference, a new training session would be required.

It is known in the state of the art, for example in "Intelligent Video Conferencing" by Stevens Institute of Technology (http://www.spfld.com/sit-design/status/design.html), that a video conferencing system could be equipped with a position sensing and tracking system. However, these systems can sense and track only one single participant in each conference room and are consequently not alleviating the problems described above.

Also in WO 2005/029739, a system is described having tags for tagging video conference participants and a tag reader. The system uses a camera for each participant wherein an autodirector automatically selects which video signal to transmit to a remote user, resulting in a very expensive and very complex system.

Document WO00/38414 discloses a device according to claim 1 and a method according to claim7. It is therefore an objective of the present invention to provide a video conference system and method, which is able to provide the remote user the possibility to easily switch from one participant of interest to another, even if they are moving inside the conference room, without losing attention while directing the camera, and without severely bothering other participants.

### Summary of the Invention

As a first object of the present invention, a video conferencing system is proposed, according to claim 1.

The position registration means are means wherein a fixed position of participants to the video conference are registered. The position sensing means senses the position of the participants present in the video conference room wherein the camera is installed. The remote user selects by the camera remote control which participant he wishes the camera to be directed to. The camera control software then requests the coordinates of the participant of interest and upon receiving this coordinates, the camera control software direct the camera to this participant. Optionally, the position sensing means sends this participant's coordinates continuously or regularly with a certain frequency to the camera control software, which keeps the camera directed to that participant, even if he moves. The camera control software itself may be adapted to keep the camera directed to the participant of interest, i.e. the camera may comprise a so-called tracking feature.

The video conferencing system in accordance with the present invention has the advantage that the remote user is able to redirect the camera to another participant of interest without keeping the position of each participant in mind. Either the position registration means keeps the registered position coordinates in its memory, either the position sensing means monitors in real time the position of each participant and is therefore aware of the position of the participants present in the room at any moment in time. The remote user just has to select the participant of interest and does not have to direct the camera to the participant of interest himself. Consequently, the remote user is left free to concentrate on following the conference. In accordance with the present invention, the position sensing means may comprise tags for tagging said video conference participants and at least one tag reader. The tags may be any kind of tags used to label objects or persons and to send its coordinates to a tag reader, such as but not limited to RFID tags or IR tags.

Further optionally, in accordance with the present invention, the position sensing means may comprise sound detection means, meaning any kind of means suitable to sense a participant's position by sound and send its coordinates to the camera control software, preferably ultrasound detection. An alternative sound detection means may comprise a speech recognition system.

In an embodiment of the first object of the present invention, the video conferencing system may further comprise at least one extra camera adapted to be directed towards a video conference participant selected by a remote user and having remote control. This embodiment makes it possible to provide the remote user an overview of the conference room via one camera together with a more focussed view on the participant of interest via a second camera.

In a further embodiment of the first object of the present invention, the video conferencing system may further comprise selection means to automatically select which camera to direct, thereby providing the best view to the remote user. Sometimes, and particularly when the participant of interest is moving, its position is such that the camera is not able to provide the remote user a decent view. When having the availability of an extra camera and selection means to select automatically which camera to direct, the best view of the participant of interest may be provided to the remote user.

In another embodiment of the first object of the present invention, the video conferencing system may further comprise a position presentation means for presenting to the remote user the position of each of the video conference participants in the room. The position presentation means may be a scheme or map or the like provided to the remote user on screen representing the position of each participant, or at least all registered or sensible participants present in the room. Although in the video conferencing system of the invention, peripheral vision is not needed to redirect the camera, the position presentation means provides the remote user indeed the ability to look in the conference room in peripheral vision.

In another embodiment of the first object of the present invention, the video conferencing system may further comprise individual microphones combined with the position registration means or position sensing means, thereby allowing the remote user to select talking participants. Upon selecting a participant of interest, the position registration means or position sensing means may activate a dedicated microphone, giving the remote user the ability to focus on what the participant of interest is saying.

Optionally, the microphone positions may be fixed and registered in the position registration means or the microphones may be tagged, so their position may be sensed by the position sensing means. Upon registration of a voice by one of the microphones, the position registration means or position sensing means, knowing the position of the microphones, may direct the camera to the talking participant. Optionally, the participants are wearing these individual microphones.

As a second object of the present invention, a method for providing a video conference is proposed, according to claim 7.

The method for providing a video conference in accordance with the present invention has the advantage that the remote user is able to redirect the camera to another participant of interest without keeping the position of each participant in mind. The remote user does not need peripheral vision anymore and just has to select the participant of interest. The remote user does not have to direct the camera to the participant of interest himself, because the camera is automatically redirected. Consequently, the remote user is left free to concentrate on following the conference. In an embodiment of the second object of the invention, the method for providing a video conference may further comprise the steps of providing at least one extra directable camera having remote control, and selecting automatically which camera to move, thereby providing the best view to the remote user.

In another embodiment of the second object of the invention, the method for providing a video conference may further comprise the step of combining sound recording with the step of position registering or sensing, thereby allowing the remote user to select talking participants.

### Brief Description of the Drawings

Fig. 1 illustrates a first embodiment of the first and second object of the invention.
Fig. 2 illustrates a second embodiment of the first and second object of the invention.
Fig. 3 illustrates a third embodiment of the first and second object of the invention.
Fig. 4 illustrates a fifth embodiment of the first and second object of the invention.

### Detailed Description of Embodiment(s)

Below, several embodiments of the first and second object of the present invention are described and explained with references to the figures. The references used are identical when indicating identical features.

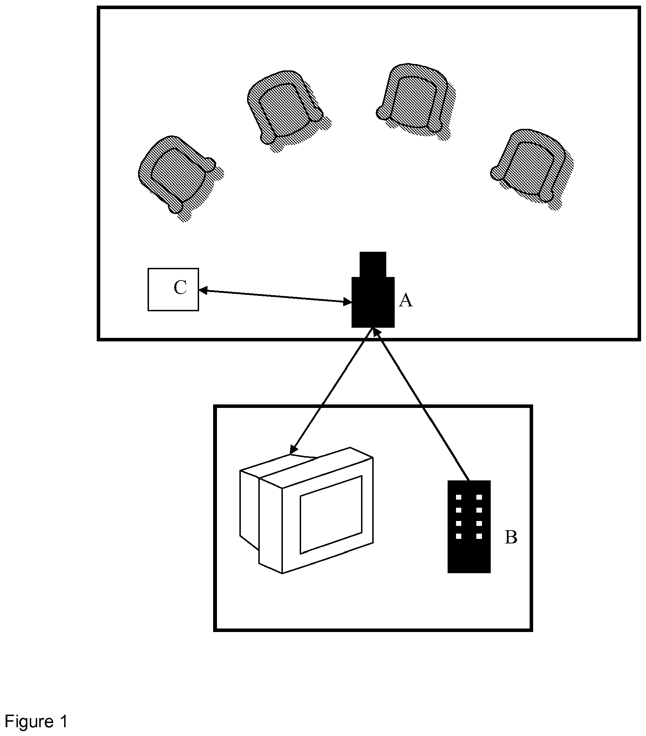

A first embodiment according to the first and second object of the present invention is now described and illustrated in figure 1.

A video conference is set up between a conference room wherein a plurality of participants is present and another conference room wherein at least one remote user is present. At least in the first conference room a fixed directable camera (A) is installed, adapted to be directed towards a video conference participant and having remote control (B). At least in the first conference room, a position registration means (C) is installed. In this position registration means, the fixed positions of the participants or the fixed positions of for example chairs where those participants will be seated are registered. Optionally, the participants name may be also registered and linked to a respective fixed position. The remote user selects by the camera remote control which participant he wishes the camera to be directed to. The camera control software requests the coordinates of the participant of interest to the position registration means. Upon receiving the coordinates of the participant of interest, the camera control software redirects the camera to that participant of interest.

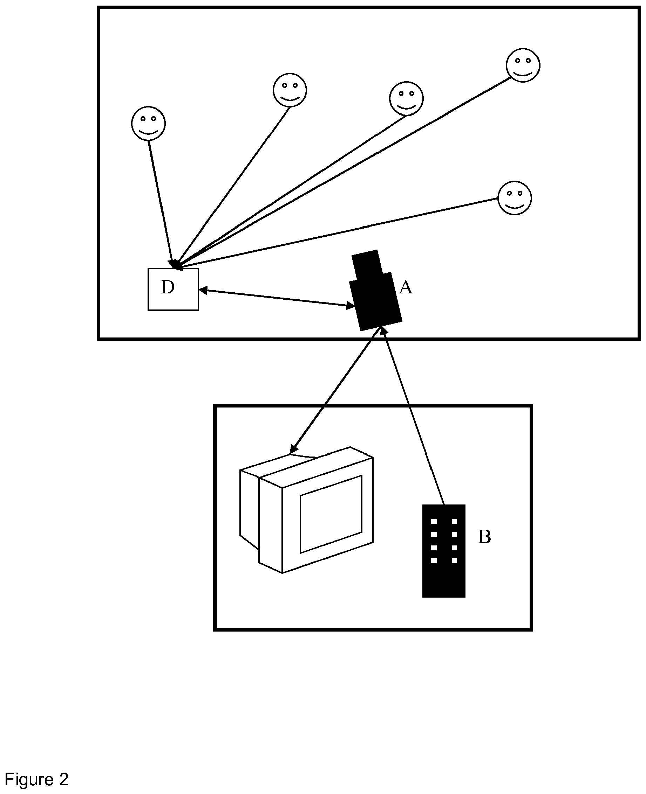

A second embodiment according to the first and second object of the present invention is now described and illustrated in figure 2.

A video conferencing system is set up between a conference room wherein a plurality of participants is present and another conference room wherein at least one remote user is present. At least in the first conference room a fixed directable camera is installed, adapted to be directed towards a video conference participant and having remote control. At least in the first conference room, a position sensing means (D) is installed, for example a number of RFID tags which a selection or all of the participants is wearing. The RFID tags are detectable by a tag reader or a pattern of tag readers installed in the conference room. The remote user then selects by the camera remote control which participant he wishes the camera to be directed to. The camera control software requests the coordinates of the participant of interest to the position sensing means. Upon receiving the coordinates of the participant of interest, the camera control software redirects the camera to that participant of interest.

Optionally, the tag reader may send the participant's coordinates continuously or regularly with a certain frequency to the camera control software, which keeps the camera directed to the participant of interest, even if he moves. In this way, the remote user just has to select the participant of interest by remote control and does not have to direct the camera to the participant of interest himself. Consequently, the remote user is left free to concentrate on following the conference.

It is clear to a person skilled in the art that a video conferencing system may be set up, wherein in both conference rooms a fixed directable camera and position registration means or position sensing means are installed, and wherein in both conference rooms a remote user or a plurality of participants including a remote user is present. Consequently, both remote users have the ability to direct the respective camera to a participant of interest in the respective conference room.

Further, it is clear to a person skilled in the art that a video conferencing system may be set up, wherein in a plurality of conference rooms a fixed directable camera and position registration means or position sensing means are installed, and wherein a remote user has the ability to switch between respective cameras in the respective conference rooms.

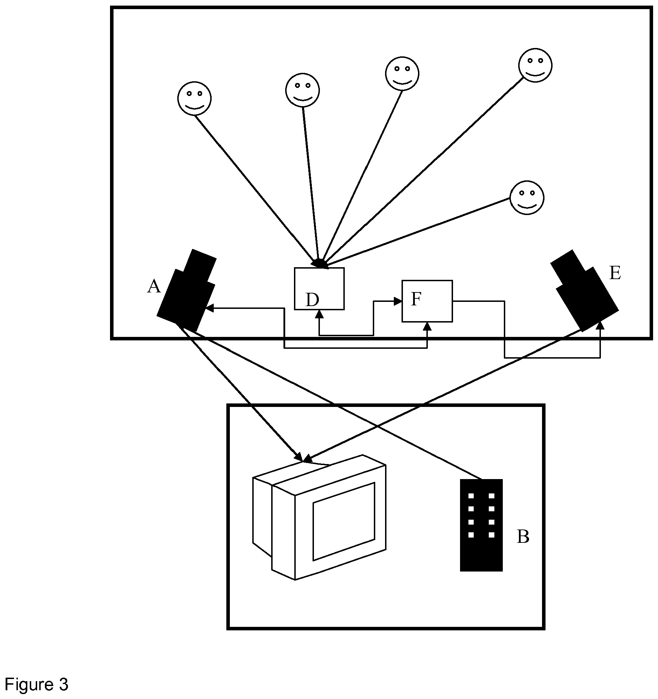

In a third embodiment according to the first and second object of the present invention and as illustrated in figure 3, the video conferencing system may further comprise at least one extra camera (E) adapted to be directed towards a video conference participant selected by a remote user and having remote control. The video conferencing system may further comprise selection means (F) to select automatically which camera to direct, thereby providing the best view to the remote user. When the remote user selects a participant he wants the camera to be directed to, the selection means requests the coordinates of the participant of interest to the position registration means or position sensing means. Upon receiving those coordinates and taking in account the coordinates of the cameras, the selection means selects the camera which is able to provide the best view to the remote user, usually the one at the shortest distance with respect to the participant of interest.

Optionally, the selection means may request to the position registration means or position sensing means the coordinates of all participants in the conference room. By taking in account the coordinates of all participants and the coordinates of the cameras, the selection means may be able to calculate which one of the camera has a non-disturbed view to the participant of interest, and may select that camera to provide a view to the remote user.

It is clear to a person skilled in the art that optionally the remote user may have the ability to overrule the selection means and may select the camera he prefers.

In a fourth embodiment according to the first and second object of the present invention, the video conferencing system may further comprise a position presentation means for presenting to the remote user the position of each of the video conference participants in the room. A scheme or map or the like of the conference room may be presented to the remote user on a screen being part of the monitor in front of the remote user, of the camera remote control, or of a separate presentation medium. This scheme or map or the like may present the position of each, or at least all registered or sensible participants present in the room. The remote user may select then the participant of interest by clicking on or touching the presented location of that participant on the scheme or map or the like.

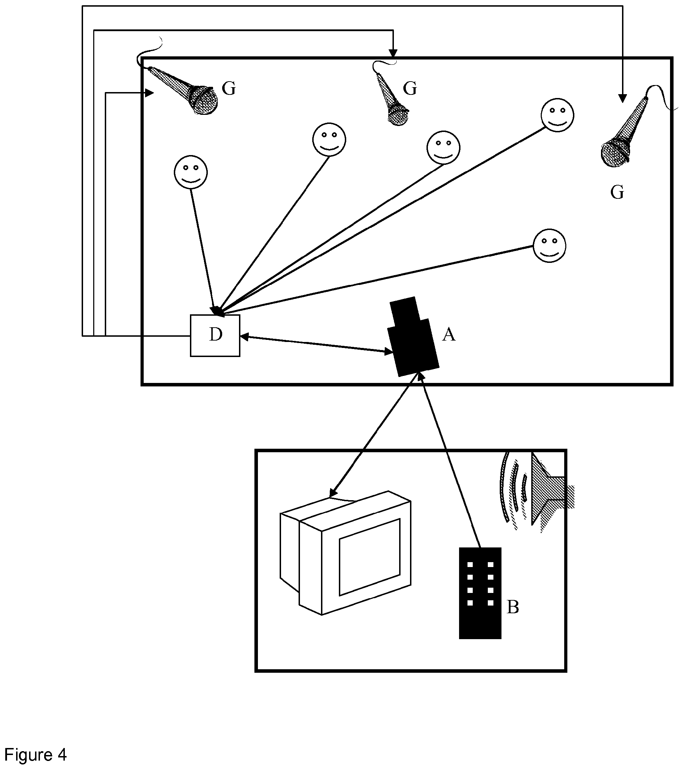

In a fifth embodiment of the first object of the present invention and as illustrated in figure 4, the video conferencing system may further comprise individual microphones (G) combined with the position registration means or position sensing means, thereby allowing the remote user to select talking participants. Upon selecting a participant of interest, the position registration means or position sensing means may activate a dedicated microphone, giving the remote user the ability to focus on what the participant of interest is saying.

Optionally, the microphone positions may be fixed and registered in the position registration means or the microphones may be tagged, so their position may be sensed by the position sensing means. Upon registration of a voice by one of the microphones, the position registration means or position sensing means, knowing the position of the microphones, may direct the camera to the talking participant. Optionally, the participants are wearing these individual microphones.

## Claims

1. A video conferencing system, comprising:
- a directable camera adapted to be directed towards a video conference participant and having remote control, and,
- a position sensing means for sensing the location of video conference participants in a room, thereby allowing the remote user to select a video conference participant for directing the camera to, **CHARACTERIZED IN THAT** the position sensing means comprises tags for tagging said video conference participants and at least one tag reader, the tags being tags used to label objects or persons and to send its coordinates to the tag reader.

2. A video conferencing system according to claim 1, wherein the position sensing means comprises sound detection means.

3. A video conferencing system according to claim 1, further comprising at least one extra camera adapted to be directed towards a video conference participant selected by a remote user and having remote control.

4. A video conferencing system according to claim 3, further comprising selection means to s automatically which camera to direct, thereby providing the best view to the remote user.

5. A video conferencing system according to claim 1, further comprising a position presentation means for presenting to the remote user the position of each of the video conference participants in the room.

6. A video conferencing system according to claim 1, further comprising individual microphones combined with the position sensing means, thereby allowing the remote user to select talking participants.

7. A method for providing a video conference comprising:
- the step of directing a camera having remote control towards a video conference participant, and
- the step of sensing the position of video conference participants in a room, thereby allowing the remote user to select a video conference participant for directing the camera to, **CHARACTERIZED IN THAT** sensing the position of video conference participants comprises tagging said video conference participants and reading the tags by at least one tag reader, the tags being tags used to label objects or persons and to send its coordinates to the tag reader.

8. A method for providing a video conference according to claim 7, further comprising the steps of providing at least one extra directable camera having remote control, and selecting automatically which camera to move, thereby providing the best view to the remote user.

9. A method for providing a video conference according to claim 7, further comprising the step of combining sound recording with the step of position sensing, thereby allowing the remote user to select talking participants.

## Patentansprüche

1. Videokonferenzsystem, umfassend:
- eine richtbare Kamera, die dazu ausgelegt ist, zu einem Videokonferenzteilnehmer hin gerichtet zu werden, und eine Fernsteuerung aufweist, und
- eine Positionserfassungseinrichtung zum Erfassen der Position von Videokonferenzteilnehmern in einem Raum, wodurch ermöglicht wird, dass der entfernte Benutzer einen Videokonferenzteilnehmer auswählt, um die Kamera auf denselben zu richten, **dadurch gekennzeichnet, dass** die Positionserfassungseinrichtung Kennzeichen zum Kennzeichnen der Videokonferenzteilnehmer und wenigstens einen Kennzeichenleser umfasst, wobei die Kennzeichen Kennzeichen sind, die verwendet werden, um Gegenstände oder Personen zu bezeichnen und deren Koordinaten an den Kennzeichenleser zu senden.

2. Videokonferenzsystem nach Anspruch 1, wobei die Positionserfassungseinrichtung Schallerkennungsmittel umfasst.

3. Videokonferenzsystem nach Anspruch 1, das ferner wenigstens eine zusätzliche Kamera umfasst, die dazu ausgelegt ist, zu einem Videokonferenzteilnehmer, der durch einen entfernten Benutzer ausgewählt wird, hin gerichtet zu werden, und eine Fernsteuerung aufweist.

4. Videokonferenzsystem nach Anspruch 3, das ferner Auswahlmittel umfasst, um automatisch auszuwählen, welche Kamera gerichtet werden soll, wodurch die beste Sicht für den entfernten Benutzer bereitgestellt wird.

5. Videokonferenzsystem nach Anspruch 1, das ferner ein Positionsdarstellungsmittel umfasst, um für den entfernten Benutzer die Position jedes der Videokonferenzteilnehmer im Raum bereitzustellen.

6. Videokonferenzsystem nach Anspruch 1, das ferner einzelne Mikrofone umfasst, die mit der Positionserkennungseinrichtung kombiniert sind, wodurch dem entfernten Benutzer ermöglicht wird, sprechende Teilnehmer auszuwählen.

7. Verfahren zum Bereitstellen einer Videokonferenz, umfassend:
- den Schritt des Richtens einer Kamera, die eine Fernsteuerung aufweist, zu einem Videokonferenzteilnehmer hin und
- den Schritt des Erfassens der Position von Videokonferenzteilnehmern in einem Raum, wodurch ermöglicht wird, dass der entfernte Benutzer einen Videokonferenzteilnehmer auswählt, um die Kamera auf denselben zu richten,
**dadurch gekennzeichnet, dass** das Erfassen der Position von Videokonferenzteilnehmern das Kennzeichnen der Videokonferenzteilnehmer und das Lesen der Kennzeichen durch wenigstens einen Kennzeichenleser umfasst, wobei die Kennzeichen Kennzeichen sind, die verwendet werden, um Gegenstände oder Personen zu bezeichnen und deren Koordinaten an den Kennzeichenleser zu senden.

8. Verfahren zum Bereitstellen einer Videokonferenz nach Anspruch 7, das ferner die Schritte des Bereitstellens wenigstens einer zusätzlichen Kamera, die eine Fernsteuerung aufweist, und das automatische Auswählen, welche Kamera bewegt werden soll, umfasst, wodurch die beste Sicht für den entfernten Benutzer bereitgestellt wird.

9. Verfahren zum Bereitstellen einer Videokonferenz nach Anspruch 7, das ferner den Schritt des Kombinierens von Schallaufzeichnung mit dem Schritt des Positionserfassenss umfasst, wodurch dem entfernten Benutzer ermöglicht wird, sprechende Teilnehmer auszuwählen.

## Revendications

1. Système de vidéoconférence comprenant :
- une caméra orientable adaptée pour être orientée vers un participant à une vidéoconférence et ayant une télécommande, et,
- un moyen de captage de position pour capter la localisation des participants à une vidéoconférence dans une salle, permettant ainsi à l'utilisateur à distance de sélectionner un participant à une vidéoconférence pour diriger la caméra vers lui, **caractérisé en ce que** le moyen de captage de position comprend des balises pour baliser lesdits participants à une vidéoconférence et au moins un lecteur de balise, les balises étant utilisées pour marquer des objets ou des personnes et pour envoyer leurs coordonnées au lecteur de balise.

2. Système de vidéoconférence selon la revendication 1, dans lequel le moyen de captage de position comprend un moyen de détection du son.

3. Système de vidéoconférence selon la revendication 1, comprenant en outre une caméra supplémentaire adaptée pour être orientée vers un participant à une vidéoconférence sélectionné par un utilisateur à distance et ayant une télécommande.

4. Système de vidéoconférence selon la revendication 3, comprenant en outre un moyen de sélection pour sélectionner automatiquement quelle caméra orienter, fournissant ainsi la meilleure vue à l'utilisateur à distance.

5. Système de vidéoconférence selon la revendication 1, comprenant en outre un moyen de présentation de position pour présenter à l'utilisateur à distance la position de chacun des participants à une vidéoconférence dans la salle.

6. Système de vidéoconférence selon la revendication 1, comprenant en outre des microphones individuels combinés avec le moyen de captage de position, permettant ainsi à l'utilisateur à distance de sélectionner les participants prenant la parole.

7. Procédé pour diffuser une vidéoconférence comprenant :
- l'étape d'orientation de la caméra ayant une télécommande vers un participant à une vidéoconférence, et
- l'étape de captage de la position des participants à une vidéoconférence dans une salle, permettant ainsi à l'utilisateur à distance de sélectionner un participant à une vidéoconférence pour orienter la caméra vers lui,
**caractérisé en ce que** le captage de la position des participants à une vidéoconférence comprend le balisage desdits participants à une vidéoconférence et la lecture des balises par au moins un lecteur de balise, les balises étant utilisées pour marquer des objets ou des personnes et pour envoyer leurs coordonnées au lecteur de balise.

8. Procédé pour diffuser une vidéoconférence selon la revendication 7, comprenant en outre les étapes de mise à disposition d'au moins une caméra extra orientable ayant une télécommande, et de sélection automatique de la caméra à déplacer, fournissant ainsi la meilleure vue à l'utilisateur à distance.

9. Procédé pour diffuser une vidéoconférence selon la revendication 7, comprenant en outre l'étape de combinaison de l'enregistrement de son avec l'étape de captage de position, permettant ainsi à l'utilisateur à distance de sélectionner les participants prenant la parole.
